Europäisches Patentamt

European Patent Office

Office européen des brevets

(11) Publication number: **0 282 662**
A1

## EUROPEAN PATENT APPLICATION

(21) Application number: 87302293.3

(22) Date of filing: 18.03.87

(51) Int. Cl.⁴: **B65G 65/42** , B65G 69/02 , B65G 65/32 , B65F 9/00

Claim 11 is deemed to be abandoned due to non-payment of the claims fee (Rule 31 (3) EPC).

(43) Date of publication of application:
21.09.88 Bulletin 88/38

(84) Designated Contracting States:
AT BE CH DE ES FR GB GR IT LI LU NL SE

(71) Applicant: HENLEY BURROWES AND COMPANY LIMITED
Sunnyside Road
Barbourne Worcester WR1 1RJ(GB)

(72) Inventor: Finch, Maurice
64 Christine Avenue
Rushwick Worcester(GB)

(74) Representative: Ajello, Michael John
38a Bramhall Lane South
Bramhall Stockport Cheshire SK7 1AH(GB)

(54) A storage bunker.

(57) A storage bunker for substantially dry and loose material such as shredded paper waste has a receptacle (10) and a conveyor (16,18) feeding material over a fixed plate (14) broken at (21) to permit the material to fall into the receptacle. The return run of conveyor (16) compacts material towards the other end of the receptacle, and the whole mass of material once the receptacle is filled is driven by conveyor (25) towards an outlet, with material being stripped from the mass by an inclined toothed conveyor (26) for collection by a troughed conveyor (28).

FIG.1

## A STORAGE BUNKER

THIS INVENTION concerns a storage bunker for substantially dry and loose materials such as shreaded paper waste, and provides a receptacle in which the material may be stored and at least partially compacted and withdrawn when required for further handling and disposal.

Many devices are known for storing materials such as shreaded paper waste. These include a storage bin having a number of conveying screws at its base operating in different directions to keep the material in motion and preventing it from bridging at the bottom of the bin. Another device is a storage silo with a tapering hopper at its base and having a number of screw conveyors projecting into the waste to discharge it from the silo. A further known device comprises a scraper conveyor which collects material and deposits it into a bunker having screw conveyors at the base for discharging the material.

The principal disadvantage with these kinds of known storage facility is that they include no means for compacting the material thus to maximise the storage capacity.

An object of the present invention is to provide a storage bunker which is capable of storing and compacting large volumes of materials.

According to the present invention there is provided a storage bunker for substantially dry and loose materials such as shreaded paper waste, comprising a receptacle having its longitudinal axis or major dimension generally horizontal, means for feeding material to the bunker at one end thereof, means within the bunker for feeding accumulated material therein towards the other end, further means within the bunker in a base region thereof for conveying compacted material forwardly towards said one end at which the material is discharged from the bunker by further conveying means.

An embodiment of the invention will now be described, by way of example only, with reference to the accompanying drawings, in which:-

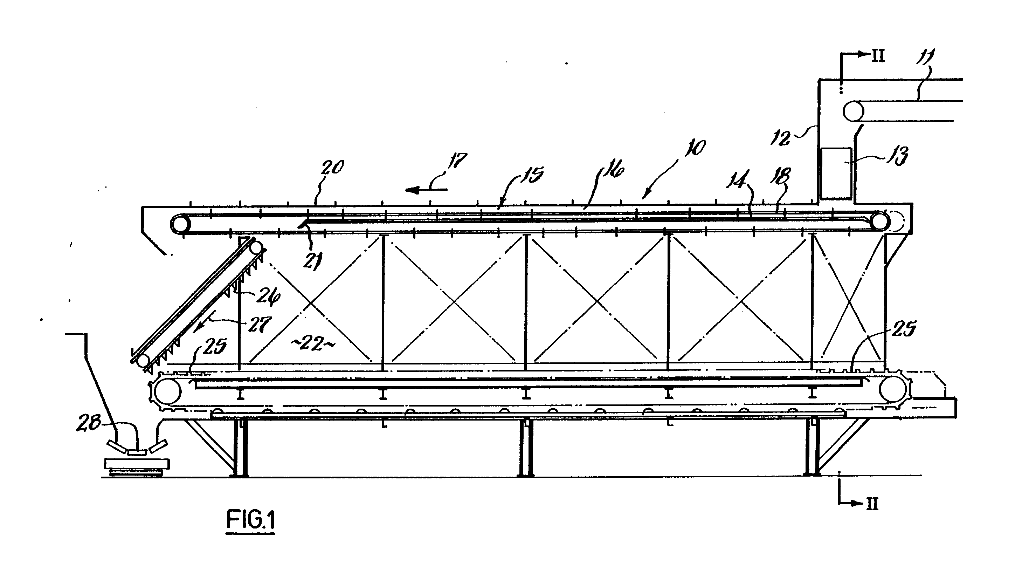

Fig. 1 is a partially-sectioned elevation of a storage bunker made in accordance with the invention;

and Fig. 2 is a vertical section along line II-II of Fig. 1.

The bunker comprises a receptacle generally indicated at 10 and being typically some 40 metres long and about 6 metres high internally. An input conveyor 11 carries materials such as shreaded paper waste to be stored and compacted into a chute 12 containing a pivotable and reciprocating distributor flap 13 which spreads the material substantially evenly across a plate 14 which extends longitudinally over the top of the bunker 10 to form a ceiling thereto. A scraping and levelling conveyor 15 having a number of spaced upstanding flights 16 are driven forwardly in the direction of arrow 17 by a pair of driven chains 18. The flights 16 serve to drive the material forwardly on plate 14 which, due to the restricted height between the plate and a fixed top 20, causes the material to assume a substantially constant depth.

At 21, the plate 14 is broken to permit access to the interior 22 of the bunker, and at this point the material is deposited by gravity into the bunker. Accumulated material within the bunker fills to a height at which it is driven backwards along the bunker by the return run of flights 16. Thus compaction takes place to a level of between $1\frac{1}{2}$-1 to 4-1.

Continuously or intermittently, substantially the whole body of material within the bunker is carried forwards by a belt plate conveyor 25 forming a floor to the bunker interior 22, towards the discharge end, the material being "stripped " off the compacted mass thereof by the bottom run of an inclined toothed conveyor belt 26 moving in the direction of arrow 27, this conveyor serving to define a wedge-like front end of the bunker space. The material stripped from the bunker by conveyor 26 may be deposited onto a troughed conveyor 28 or any other suitable means for transferring the material from the output end of the bunker to, say, an incinerator or pelleting press.

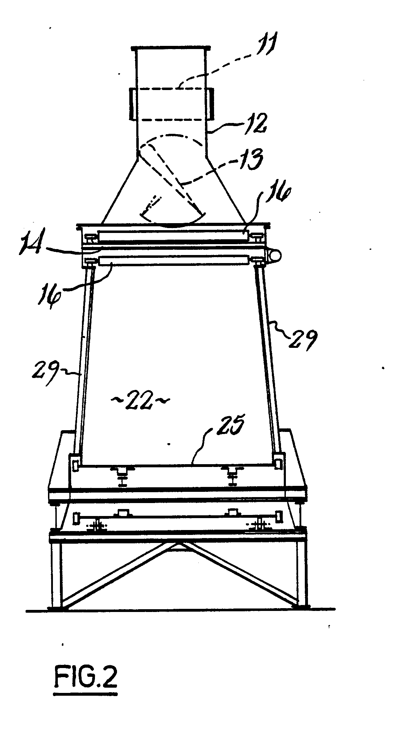

It will be seen from Fig. 2 that the side walls 29 of the bunker diverge towards its base thus ensuring that material will always descend towards belt plate conveyor 25.

The conveyor 25 may be driven intermittently or continuously and at variable speed depending upon the required dischage rate. Similarly, the speed at which conveyor flights 16 are driven may be varied during operation to control the feed rate to the bunker. For this purpose, proximity devices may be provided at spaced positions along the bunker and throughout its height thus to control the input and output of materials.

Liquor sprays may be incorporated close to material input point 21 to control the condition of the material entering the bunker.

It is expected that a bunker having the dimensions mentioned above will be capable of containing some 25 to 35 tonnes of material by virtue of the compaction provided. Drive motors for conveyors 11, 15, 25 and 26 may be of a low horsepower rating since none drives more than a light load. The system is, therefore, inexpensive to operate and maintain.

## Claims

1. A storage bunker for substantially dry and loose materials such as shredded paper waste, comprising a receptacle having its longitudinal axis or major dimension generally horizontal, means for feeding the material to the receptacle at one end thereof, means within the receptacle for feeding material accumulated therein towards the other end thereof, further means within the receptacle in a base region thereof for conveying compacted material forwardly towards said one end at which the material is discharged from the receptacle by an output conveyor.

2. A storage bunker according to Claim 1, wherein said means for feeding material to the receptacle comprises a plate extending longitudinally over the top of the receptacle to form a ceiling thereto and a scraping and levelling conveyor having spaced upstanding flights driven in one direction towards said one end of the receptacle, there being a zone of restricted height between the plate and a fixed top above the latter, through which said flights travel to convey the material thus to cause the material to assume a substantially constant depth, said plate being broken at said one end of the receptacle to permit the material to enter the interior thereof.

3. A storage bunker according Claim 1 or Claim 2, wherein said means within the receptacle for feeding accumulated material towards the other end thereof is provided by a return run of said feeding means with spaced flights moving in one direction towards said other end within the receptacle.

4. A storage bunker according to any preceding claim, wherein said further means for conveying compacted material, comprises a conveyor forming a floor to the receptacle interior and driven towards said one end of the receptacle.

5. A storage bunker according to any preceding Claim, wherein said output conveyor comprises a lower run of an inclined toothed conveyor disposed so as to define a wedge-like front end of the receptacle and serving to strip material from a compacted mass thereof driven forwardly within the latter.

6. A storage bunker according to Claim 4, wherein compacted material conveyor is optionally driven intermittently or continuously and at a variable speed according to the required discharge rate.

7. A storage bunker according to Claim 2, wherein the speed at which said scraping and levelling conveyor is driven may be varied to control the feed rate of material to the receptacle, sensing means being provided to detect the quantity of material within the receptacle and to control the input and output of materials accordingly.

8. A storage bunker according to any preceding claim, including liquor sprays disposed close to the material input point to control the condition of material entering the receptacle.

9. A storage bunker according to any preceding claim, wherein said receptacle includes a pair of opposed longitudinal side walls diverging towards its base.

10. A storage bunker according to any preceding claim, including an input conveyor feeding an inlet chute in which there is positioned a pivotable and reciprocating distributor flap to spread material substantially evenly across the feeding means.

11. A storage bunker substantially as hereinbefore described with reference to and as illustrated in the accompanying drawings.

FIG.1

0 282 662

FIG.2

**European Patent Office**

**EUROPEAN SEARCH REPORT**

Application number

EP 87 30 2293

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-U-7 439 381 (PASSAVANT-WERKE MICHELBACHER HÜTTE) * page 2, line 1 - page 5, line 17; figures 1,2 * | 1 | B 65 G 65/42 B 65 G 69/02 B 65 G 65/32 B 65 F 9/00 |
| A | | 2-4,6 7 | |
| Y | DE-A-2 439 505 (WOLF STAHLBAU) * page 2, lines 16-33; figure * | 1 | |
| A | | 4,5 | |
| Y | DE-U-1 837 883 (VEB FORTSCHRITT) * page 2, lines 9-20; figure * | 1 | |
| | | | **TECHNICAL FIELDS SEARCHED (Int. Cl.4)** |
| A | | 4,5 | B 65 F 7/00 B 65 F 9/00 B 65 G 3/00 |
| A | US-A-2 717 703 (KULL et al.) * column 3, lines 27-49; figures 1,2 * | 1,3-5, 9 | B 65 G 47/00 B 65 G 65/00 B 65 G 69/00 |
| A | DE-A-2 855 483 (CARL SCHENCK) * claim 1; page 7, lines 2-25; figures 1,2 * | 1,7 | |
| | --- -/- | | |

The present search report has been drawn up for all claims

| Place of search | Date of completion of the search | Examiner |
|---|---|---|
| BERLIN | 03-11-1987 | SIMON J J P |

| | DOCUMENTS CONSIDERED TO BE RELEVANT | | Page  2 | |
|---|---|---|---|
| **Category** | Citation of document with indication, where appropriate, of relevant passages | Relevant to claim | CLASSIFICATION OF THE APPLICATION (Int. Cl.4) |
| A | DE-A-2 600 161  (METAL BOX)<br>*  page 5, line 21 - page 6, line 5; figure 2 *<br><br>--- | 8 | |
| A | DE-C-  275 294<br>(AKTIENGESELLSCHAFT LAUCHHAMMER)<br>* page 1,  lines  25-35;  figures 1-3 *<br><br>--- | 10 | |
| E | GB-A-2 180 227  (HENLEY BURROWES & CO.)<br>* whole document *<br><br>----- | 1-10 | |
| | | | **TECHNICAL FIELDS SEARCHED (Int. Cl.4)** |

The present search report has been drawn up for all claims

| Place of search<br>BERLIN | Date of completion of the search<br>03-11-1987 | Examiner<br>SIMON  J  J  P |
|---|---|---|